(19) Europäisches Patentamt
European Patent Office
Office européen des brevets

(11) **EP 2 913 359 B1**

(12) **EUROPEAN PATENT SPECIFICATION**

(45) Date of publication and mention
of the grant of the patent:
**03.10.2018 Bulletin 2018/40**

(51) Int Cl.:
***C08L 27/06*** (2006.01)      ***C08L 25/14*** (2006.01)
*C08F 14/06* (2006.01)      *C08F 212/08* (2006.01)
*C08F 220/06* (2006.01)

(21) Application number: **13849463.8**

(22) Date of filing: **22.10.2013**

(86) International application number:
**PCT/KR2013/009434**

(87) International publication number:
**WO 2014/065570 (01.05.2014 Gazette 2014/18)**

(54) **POLYVINYL CHLORIDE-BASED PASTE RESIN, AND PREPARATION METHOD THEREFOR**

PASTÖSES HARZ AUF POLYVINYLCHLORIDBASIS UND HERSTELLUNGSVERFAHREN DAFÜR

RÉSINE EN PÂTE À BASE DE POLY(CHLORURE DE VINYLE) ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2012 KR 20120119763**

(43) Date of publication of application:
**02.09.2015 Bulletin 2015/36**

(73) Proprietor: **Hanwha Chemical Corporation**
**Seoul 100-797 (KR)**

(72) Inventors:
• **SIM, Ki Jo**
**Daejeon 305-721 (KR)**
• **KIM, Jae Song**
**Daejeon 305-750 (KR)**
• **CHOI, Jeong Hyun**
**Daejeon 305-805 (KR)**
• **JANG, Yeon Su**
**Daejeon 302-243 (KR)**
• **JANG, Tae Young**
**Namwon-si**
**Jeollabuk-do 590-040 (KR)**

(74) Representative: **Alt, Michael**
**Bird & Bird LLP**
**Maximiliansplatz 22**
**80333 München (DE)**

(56) References cited:
**KR-A- 20110 074 094      KR-B1- 100 301 128**
**KR-B1- 830 002 456       US-A- 2 988 530**
**US-A- 5 391 585**

**Description**

**BACKGROUND OF THE INVENTION**

**(a) Field of the Invention**

The present invention relates to a polyvinyl chloride paste resin as defined in claim 1 and a preparation method thereof as defined in claim 4. More specifically, it relates to a polyvinyl chloride paste resin showing excellent foamability and moisture resistance, and a preparation method thereof.

**(b) Description of the Related Art**

Polyvinyl chloride paste resin (hereinafter, "PSR") is a kind of general purpose resin that has been widely used for construction supplies, daily necessities such as wallpapers, artificial leathers, fabrics, sheets, and films, and industrial supplies, and it is generally used for foam articles. Most important things to the foam articles are the foam article surface, the foam cell size, and the uniformity of cells, and the characteristics are appellatively called as "foamability".

As the technology for improving the foamability of PSR, there are the method of modifying PSR itself and the method of optimally controlling a stabilizer, a foaming agent, a cell conditioning agent, and so on which are intimately related with the foaming characteristics among the additives for foam blending.

Among them, as the method for modifying PSR itself, 1) a method of regulating the melt viscosity of PSR to be suitable for a foaming condition by controlling the degree of polymerization of the same, 2) a method of increasing the content of an emulsifier such as sodium lauryl sulfate (hereinafter, 'SLS') used for polymerization of PSR for foaming, and 3) a method of dissolving and dispersing acrylate resin powder in dioctyl phthalate (hereinafter, 'DOP') and mixing the same with PSR, and drying and pulverizing the same are known. Furthermore, as the method of controlling the additives used for foam blending, a method of changing the combination or the content of a foaming agent and a stabilizer according to the degree of polymerization of the resin, or a method of adding a foaming cell conditioning agent is known.

The largest factor influencing the foamability of the final product is the foamability of the resin itself. Therefore, if the foaming characteristic of the resin itself is not good, there is a limit to the technology for improving the foamability by controlling (or adding) the additives.

The easiest method of modifying the foaming characteristics of PSR itself is the method of regulating the degree of polymerization or the method of increasing the content of SLS. These methods have an advantage of increasing the expansion ratio but there is a limit for preparing the product having excellent foamability.

Furthermore, the method of dissolving acrylic resin powder in DOP, mixing the same with PSR latex, and drying and pulverizing the same has the effect on the improvement of foamability. However, when the acrylic resin solution is added to the PSR latex including ion exchanged water as the main component, the acrylic resin solution is poorly dispersed and exists as aggregates because of its poor compatibility with ion exchanged water, and thus it causes the aggregation of primary particles of PSR in the latex or adheres to the sieve or the wall of dryer during transportation or drying process of the latex, and disturbs a normal resin production. Therefore, for resolving this problem, there is an inconvenience of using a surfactant for dispersing the acrylic solution.

Such prior techniques are effective in the improvement of the foamability of the resin itself but they have a disadvantage in that the thermal stability becomes weaken, or the improvement of the foamability is restrictive or inconvenient. Particularly, when the content of the emulsifier is increased, there is the possibility that the foamability gets worse by the moisture in the atmosphere. Generally, PSR resin is very sensitive to the moisture due to the nature of the emulsifier having a hydrophilic group and a hydrophobic group together, and when the PSR resin absorbs the moisture in the atmosphere, there are the problems that the uniformity of cells gets worse, the size of cell increases, and unevenness occurs on the surface.

US 2,988,530 discloses compositions comprising blends of vinyl chloride polymers with alpha-methyl-styrene/acrylonitrile/styrene polymers.

US 5,391,585 (A) relates to a foamable thermoplastic resin compositions having vinyl chloride polymer, a graft copolymer having a superstrate grafted to a substrate wherein the superstrate has alphamethyl styrene, unsaturated nitrile, and unsubstituted styrene therein, and the substrate is a butadiene rubber, a rubber-free copolymer having alkylmethacrylate, vinyl aromatic, and unsaturated nitrile therein, and a chemical blowing agent.

KR 830002456 (B1) discloses a cellular foamed body of a vinyl chloride-based resin.

KR 100301128 (B1) relates to method for preparing polyvinyl chloride paste resin which improves the foaming property of the polyvinyl chloride paste resin and does not increase the viscosity of plastisols.

## SUMMARY OF THE INVENTION

It is a purpose of the present invention to provide a polyvinyl chloride paste resin that is superior in viscosity, foamability, and moisture resistance, to resolve said problems of prior techniques.

Furthermore, it is another purpose of the present invention to provide a preparation method of the polyvinyl chloride paste resin.

In order to achieve the purpose, one aspect of the present invention provides a polyvinyl chloride paste resin including a polyvinyl chloride resin; and a styrene/acrylic resin.

Furthermore, another aspect of the present invention provides a preparation method of the polyvinyl chloride paste resin including the steps of:

preparing a polyvinyl chloride resin latex including a polyvinyl chloride resin;
adding a styrene/acrylic resin solution to the polyvinyl chloride resin latex; and
drying the polyvinyl chloride resin latex to which the styrene/acrylic resin solution is added.

The polyvinyl chloride paste resin of the present invention shows excellent foamability and moisture resistance and shows improved viscosity characteristic. Therefore, the polyvinyl chloride paste resin prepared by the method of the present invention may be widely applied to high expandable foam articles.

Furthermore, according to the preparation method of the polyvinyl chloride paste resin of the present invention, it is possible to prepare the polyvinyl chloride paste resin showing excellent foamability and moisture resistance relatively simply without a modification of polyvinyl chloride resin itself by adding the styrene/acrylic resin solution having compatibility with the polyvinyl chloride resin latex.

## BRIEF DESCRIPTION OF THE DRAWINGS

Fig. 1 represents the photos of the cross sections of the foam sheets of Examples 1 and 2 and Comparative Example 1 taken by using an optical microscope.
Fig. 2 represents the photos of the cross sections of the foam sheets of Example 3 and Comparative Example 1 taken by using an optical microscope.

## DETAILED DESCRIPTION OF THE EMBODIMENTS

The polyvinyl chloride (PVC) paste resin (PSR) of the present invention includes a PVC resin; and a styrene/acrylic resin.

And, the preparation method of the PVC paste resin includes the steps of: preparing a PVC resin latex including a PVC resin; adding a styrene/acrylic resin solution to the PVC resin latex; and drying the PVC resin latex to which the styrene/acrylic resin solution is added.

In the present invention, the terms "the first", "the second", and the like are used for explaining various components and said terms are only used for distinguishing one component from the other components.

Additionally, the word "on" or "above", as used in the context of formation or construction of one layer or element, means pertaining to the direct formation or construction of one layer or element on another layer or element directly or the additional formation or construction of one layer or element between layers or on a subject or substrate.

Hereinafter, the PVC paste resin of the present invention and the preparation method thereof are explained in more detail.

The polyvinyl chloride (PVC) paste resin (PSR) of the present invention includes a PVC resin; and a styrene/acrylic resin.

The PVC paste resin means powder of tiny particle form, and the PVC paste resin of the present invention includes a PVC resin; and a styrene/acrylic resin. At this time, each particle may include only the PVC resin or only the styrene/acrylic resin, or may be a coagulated particle in which the PVC resin and the styrene/acrylic resin are mixed or bonded together, and the PVC paste resin may be a mixture of such particles.

And, the PVC resin is a homopolymer of vinyl chloride or a copolymer of vinyl chloride and a comonomer which can be copolymerized with the same. The degree of polymerization of the PVC paste resin of the present invention may be about 1,000 to about 1,700, and the weight average molecular weight of the same may be about 45,000 to about 200,000 g/mol. When the resin has the degree of polymerization and the weight average molecular weight, the dispersibility of plasticizer is good and it is suitable for the process for plastisol.

The styrene/acrylic resin is a copolymer of styrene monomer and acrylic monomer, in which the styrene monomer and the acrylic monomer are copolymerized with the weight ratio of 60:40 to 80:20, and preferably about 60:40 to about 70:30. By using the styrene/acrylic copolymer copolymerized with the weight ratio is used, the PVC paste resin showing more excellent foamability and moisture resistance can be obtained.

The styrene monomer includes styrene and alpha-methylstyrene monomer. The weight ratio of styrene and alpha-methylstyrene may be about 50:50 to about 90:10.

Furthermore, the acrylic monomer may include only acrylic acid or both of acrylic acid and an alkyl acrylate. When it includes acrylic acid and the alkyl acrylate together, the weight ratio of acrylic acid and the alkyl acrylate may be about 80:20 to about 90:10.

The styrene/acrylic resin may have the weight average molecular weight (Mw) of about 1,000 to about 20,000 g/mol, preferably about 1,500 to about 15,000 g/mol, and more preferably about 5,000 to about 14,000 g/mol. By using the styrene/acrylic resin having said weight average molecular weight, the PVC paste resin showing excellent foamability and moisture resistance can be obtained according to the purpose of the present invention.

According to one embodiment of the present invention, the weight ratio of the PVC resin and the styrene/acrylic resin may be about 1:0.0005 to about 1:0.2, and preferably about 1:0.001 to about 1:0.1. When the resin includes the PVC resin and the styrene/acrylic resin with said ratio, it can exhibit excellent foamability and moisture resistance.

The PVC paste resin for high magnification foaming is foamed with including much forming agent for increasing the expansion ratio in the preparation of plastisol. However, in accordance with the increase of the expansion ratio, it becomes hard to realize the uniform foamability. Furthermore, since the static viscosity of the same is low and it is easy to roll down when the resin is made into plastisol and coated on a substrate, a defect may occur due to the partial deviation of the thickness. Furthermore, since the PVC past resin is generally very sensitive to moisture, there is a disadvantage of that the foamability deteriorates and the surface defects occur in a high humidity circumstance.

However, the plastisol prepared by using the PVC paste resin of the present invention can be usefully used to various fields such as high foaming mat, sheet, and films because it shows excellent foamability such as good foam surface and uniform foam cells, and high viscosity. Furthermore, it can maintain the foamability even in a high humidity circumstance because it shows excellent moisture resistance.

According to another embodiment of the present invention, a preparation method of the PVC paste resin including the steps of: preparing a PVC resin latex including a PVC resin; adding a styrene/acrylic resin solution to the PVC resin latex; and drying the PVC resin latex to which the styrene/acrylic resin solution is added is provided.

At first, the PVC latex including the PVC resin is prepared. The PVC resin latex is an emulsion of the PVC resin particles of 0.1 to several micrometers($\mu$m) dispersed in deionized water.

The method for preparing the PVC resin latex is not limited particularly, and the latex can be prepared by a common method known in the field to which the present invention pertains.

For example, according to one embodiment of the present invention, the latex may be prepare by the processes of adding sole vinyl chloride monomer or a mixture of vinyl chloride monomer and a comonomer copolymerizable with the same, an emulsifier, and a polymerization initiator to an aqueous solvent; homogenizing the mixture solution; and carrying out a micro suspension polymerization of the same.

Or, the latex may be prepared by carrying out an emulsion polymerization or a seed emulsion polymerization after adding an emulsifier and a water soluble polymerization initiator to an aqueous medium including sole vinyl chloride monomer or a mixture of vinyl chloride monomer and a comonomer copolymerizable with the same.

The comonomer which can be copolymerized with vinyl chloride monomer may be olefins such as ethylene, propylene, butene, and so on; vinyl esters of carboxylic acids such as vinyl acetate, vinyl propionate, vinyl stearate, and so on; vinyl ethers having an alkyl group such as methyl vinyl ether, ethyl vinyl ether, octyl vinyl ether, lauryl vinyl ether, and so on; vinylidene halides such as vinylidene chloride and so on; unsaturated carboxylic acids and acid anhydrides thereof such as acrylic acid, methacrylic acid, fumaric acid, maleic acid, itaconic acid, maleic anhydride, itaconic anhydride, and so on; unsaturated carboxylic acid esters such as methyl acrylate, ethyl acrylate, monomethyl maleate, dimethyl maleate, butylbenzyl maleate, and so on; aromatic vinyl compounds such as styrene, $\alpha$-methyl styrene, divinyl benzene, and so on; unsaturated nitriles such as acrylonitrile and so on; or cross-linkable monomers such as diallylphthalate, and these comonomers may be used solely or in the form of a mixture of two or more of them.

Anionic emulsifiers or nonionic emulsifiers may be used solely or in the form of a mixture as the emulsifier. The nonionic emulsifier may be a carboxylic acid, an alkyl sulfonic acid, an alkyl benzene sulfonic acid, an $\alpha$-olefin sulfonic acid, or an alkyl phosphoric acid. The nonionic emulsifier may be a polyoxyethylene ether, a polyoxyethylene alkyl phenyl ether, a polyoxyethylene alkenyl ether, a polyoxyethylene derivative, a glycerin fatty acid ester, a sorbitan fatty acid ester, a polyoxyethylene fatty acid ester, a silicone emulsifier, and so on.

The emulsifier may be introduced into the aqueous medium at once before the polymerization reaction or continuously during the polymerization reaction. Furthermore, the emulsifier may be added to the latex after the polymerization reaction is finished, and said methods may be used in combination with necessity.

An assistant dispersant may be further used with necessity during the micro suspension polymerization, the emulsion polymerization, or the seed emulsion polymerization.

The assistant dispersant is used with the emulsifier for maintaining the stability of the polymerization and the latex, and specifically, it may be higher alcohols such as lauryl alcohol, myristic alcohol, stearyl alcohol, and so on, or higher fatty acids such as lauric acid, myristic acid, palmitic acid, stearic acid, and so on.

The polymerization initiator for the micro suspension polymerization may be organic peroxide-based initiators such as peroxy dicarbonates such as diisopropyl peroxy dicarbonate and so on, and peroxy esters such as t-butylperoxy pivalate, t-butylperoxy neodecanoate, and so on, or azo-based initiators such as 2,2-azobisisobutyronitrile. The initiator may be used solely or in the form of a mixture.

The polymerization initiator for the emulsion polymerization or the seed emulsion polymerization may be ammonium persulfate, potassium persulfate, sodium persulfate, hydrogen peroxide, and so on, and with necessity, a reducing agent such as sodium sulfite, sodium, ascorbic acid, and so on may be used in addition to the initiator.

The PVC resin latex may be prepared by mixing and polymerizing said components. After the polymerization is completed, the unreacted monomer may be eliminated therefrom.

Furthermore, it may differ according to the polymerization method but the content of the solid including the PVC resin may be about 30 to about 60 weight% in the PVC resin latex.

Subsequently, the styrene/acrylic resin solution is added to the PVC resin latex.

The styrene/acrylic resin is a copolymer of a styrene monomer and an acrylic monomer in which the styrene monomer and the acrylic monomer are copolymerized with the weight ratio of 60:40 to 80:20, and preferably about 60:40 to about 70:30. By using the styrene/acrylic copolymer polymerized with said weight ratio, the PVC paste resin showing more excellent foamability and moisture resistance can be obtained.

As the styrene monomer, a mixture of styrene and alpha-methyl styrene is used. The weight ratio of styrene and alpha-methyl styrene may be about 50:50 to about 90:10.

Furthermore, as the acrylic monomer, acrylic acid may be used solely or a mixture of acrylic acid and an alkyl acrylate may be used. When the mixture of acrylic acid and an alkyl acrylate is used, the weight ratio of acrylic acid and the alkyl acrylate may be about 80:20 to about 90:10.

The styrene/acrylic resin may be obtained by polymerizing the styrene monomer and the acrylic monomer as disclosed above. The polymerization method of the styrene/acrylic resin is not limited particularly, and the resin can be polymerized by a common method known in the field to which the present invention pertains. For example, the styrene/acrylic resin may be prepared by a method of continuously bulk polymerizing the styrene monomer and the acrylic monomer at the reaction temperature of 150-250 °C in the presence of a mixed solvent of diethyleneglycolmonoethylether or dipropyleneglycolmethylether and water, but the present invention is not limited to or by this.

The styrene/acrylic resin may have the weight average molecular weight (Mw) of about 1,000 to about 20,000 g/mol, preferably about 1,500 to about 15,000 g/mol, and more preferably 5,000 to 14,000 g/mol. By using the styrene/acrylic resin having said weight average molecular weight, the PVC paste resin showing excellent foamability and moisture resistance can be obtained according to the purpose of the present invention.

The styrene/acrylic resin solution may be added thereto with the amount of about 0.1 to about 10 parts by weight, and preferably about 1 to about 8 parts by weight, per 100 parts by weight of the PVC resin latex. When the styrene/acrylic resin solution is included therein with the amount less than 0.1 parts by weight, the foamability improvement effect is almost never shown. On the contrary, when it is added thereto too much, over 10 parts by weight, it may cause problems of deterioration of foaming speed, increase in viscosity, coagulation during dry process, and so on.

The styrene/acrylic resin solution may be an aqueous solution prepared by dissolving the styrene/acrylic resin in deionized water of a weak alkaline condition, for example, pH 8 to 9, with the concentration of about 0.1 to about 50%, and preferably about 1 to about 30 %.

As disclosed above, the styrene/acrylic resin solution is added thereto in the state of an aqueous solution, and thus it can show high compatibility with the PVC resin latex that is dispersed in an aqueous solvent such as deionized water. Therefore, the use of a separate surfactant or an additive is unnecessary.

Subsequently, the PVC resin latex to which the styrene/acrylic resin solution is added is dried.

The drying process may be carried out by a common method known in the field to which the present invention pertains. For example, it may be carried out according to a spray drying method using a wheel type spray dryer, and at this time, the temperature of the inlet may be about 140 to about 160°C.

As disclosed above, the PVC paste resin (PSR) of fine powder form can be prepared by drying the PVC resin latex.

The PVC paste resin obtained by the drying process may be prepared into a plastisol by adding a foaming agent, a plasticizer, calcium carbonate, and other additives thereto.

The plasticizer may be properly selected from the materials known in the field to which the present invention pertains, and the content may be controlled by considering the use. For example, phthalic acid derivatives such as dioctyl phthalate, dibutyl phthalate, diisobutyl phthalate, diheptyl phthalate, di-(2-ethylhexyl) phthalate, di-n-octyl phthalate, dinonyl phthalate, diisodecyl phthalate, diundecyl phthalate, dicyclohexyl phthalate, butylbenzyl phthalate, diphenyl phthalate, and so on, isophthalic acid derivatives, adipic acid derivatives, sebacic acid derivatives, maleic acid derivatives, trimellitic acid derivatives, pyromellitic acid derivatives; phosphoric acid derivatives, glycol derivatives, glycerin derivatives, adipic acid-based polyesters, sebacic acid-based polyester, and so on may be used. The plasticizers may be used solely or in the form of a mixture of two or more different plasticizers.

The foaming agent is also not limited particularly, and it may be properly selected from the materials known in the field to which the present invention pertains, and the content may be controlled by considering the use. For example, sodium bicarbonate, ammonium bicarbonate, ammonium carbonate, azodicarbonamide, azodiisobutyro-nitrile, benzenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, trihydrazino triazine, and so on may be used. These foaming agents may be used solely or in the form of a mixture of two or more different foaming agents.

Furthermore, the plastisol may be prepared by adding other additives, for example, a thermal stabilizer, a filler, a surfactant, a viscosity modifier, a tackifier, a coloring agent, a thinner, a UV absorbent, an antioxidant, a reinforcing agent, and other resins thereto in addition to the plasticizer, the foaming agent, and calcium carbonate, and mixing the same uniformly with necessity.

The plastisol prepared as disclosed above can be usefully used to various fields such as high foaming mat, sheet, and films because it shows excellent foamability such as good foam surface and uniform foam cells, and high viscosity. Furthermore, it can maintain the foamability even in a high humidity circumstance because it shows excellent moisture resistance.

For example, the plastisol including the PVC paste resin of the present invention may show high viscosity of about 500 to about 400,000 cps, preferably about 3,000 to about 10,000 cps, and more preferably about 7,000 to about 10,000 cps, when it is measured at 25 °C by using Brookfield viscometer (spindle #4~6).

Furthermore, when the plastisol including the PVC paste resin of the present invention is coated with the thickness of 1 mm and foamed at 230 °C, the uniformity of the foam cells calculated by the following Equation 1 is about 2 or less, preferably about 1 to about 2, and more preferably about 1 to 1.5, and thus it can show very uniform foamability.

[Equation 1]

$$\text{Uniformity of Cells} = \text{Maximum Cell Size} / \text{Minimum Cell Size}$$

Hereinafter, the present invention is explained in more detail by referring to the following examples. However, the following examples are only for illustrating the present invention, and the scope of the present invention is not limited to or by them.

**<Examples>**

**Preparation of styrene/acrylic resin solution**

**Preparation Example 1**

The water soluble styrene/acrylic resin was prepared by carrying out a continuous bulk polymerization of styrene monomers (styrene and alpha-methyl styrene) and an acrylic monomer in a 1L SUS reactor with the amount disclosed in below Table 1. The polymerization initiator used was t-butyl peroxy benzoate, and the amount used was 0.2 parts by weight per total weight of monomers. And, a mixture of dipropyleneglycolmethylether and water was used in the amount of 9.0 parts by weight per 100 parts by weight of the monomers as the solvent. At this time, water content in the mixed solvent was 18%. The reaction temperature was 217 °C.

After mixing 30 parts by weight of the styrene/acrylic resin (Mw 12,800) with 62.8 parts by weight of ion exchanged water, 7.2 parts by weight of 28% ammonia water was added thereto dividedly 2~3 times while heating the mixture to 70 °C. And then, the styrene/acrylic resin solution was prepared by stirring the same at high speed for about 2~3 hrs.

**Preparation Example 2**

The water soluble styrene/acrylic resin was prepared by carrying out a continuous bulk polymerization of styrene monomers (styrene and alpha-methyl styrene) and an acrylic monomer in a 1L SUS reactor with the amount disclosed in below Table 1. The polymerization initiator used was t-butyl peroxy benzoate, and the amount used was 0.4 parts by weight per total weight of monomers. And, a mixture of dipropyleneglycolmethylether and water was used in the amount of 9.0 parts by weight per 100 parts by weight of the monomers as the solvent. At this time, water content in the mixed solvent was 18%. The reaction temperature was 221 °C.

After mixing 30 parts by weight of the styrene/acrylic resin (Mw 9,500) with 62.8 parts by weight of ion exchanged water, 7.2 parts by weight of 28% ammonia water was added thereto dividedly 2~3 times while heating the mixture to 70 °C. And then, the styrene/acrylic resin solution was prepared by stirring the same at high speed for about 2~3 hrs.

[Table 1]

|  | Preparation Example 1 | Preparation Example 2 |
|---|---|---|
| Styrene (parts by weight) | 33.6 | 34.0 |
| Alpha-methyl styrene (parts by weight) | 33.2 | 32.6 |
| Acrylic acid (parts by weight) | 33.2 | 33.4 |
| Reaction Temperature (°C) | 217 | 221 |
| Number average molecular weight | 7,100 | 5,300 |
| Weight average molecular weight | 12,800 | 9,500 |

**Preparation of PVC paste resin**

**Example 1**

After putting 78 kg of deionized water and 87 kg of vinyl chloride monomer in a high pressure reactor, the PVC latex was prepared by carrying out an emulsion polymerization in the high pressure reactor of 50°C.
The weight average molecular weight of the prepared PVC resin latex was 170,000 g/mol, and the content of the solid including the PVC resin was 45 %.
5 parts by weight of the styrene/acrylic resin solution prepared in Preparation Example 1 was added to 100 parts by weight of the prepared PVC resin latex. The PVC paste resin was obtained by drying the PVC resin latex to which the styrene/acrylic resin solution was added in a wheel type spray dryer and pulverizing the same.
The plastisol was prepared by adding 70 g of dioctyl phthalate, 3g of Ba/Zn-based stabilizer, 3 g of azodicarbonamide (ADCA)-based foaming agent, and 40g of calcium carbonate to 100 g of the obtained PVC paste resin, and mixing the same for 15 mins in a vacuum state by using Raikaiki Mixer of Ishikawa Co.,Ltd.

**Example 2**

The PVC paste resin and the plastisol were prepared according to the same method as in Example 1, except that 5 parts by weight of the styrene/acrylic resin solution prepared in Preparation Example 2 was used.

**Example 3**

The PVC paste resin and the plastisol were prepared according to the same method as in Example 1, except that 1 part by weight of the styrene/acrylic resin solution prepared in Preparation Example 1 was used.

**Comparative Example 1**

The PVC paste resin and the plastisol were prepared according to the same method as in Example 1, except that the styrene/acrylic resin solution was not added in Example 1.

**<Experimental Examples>**

The properties of Examples and Comparative Examples were evaluated by the following methods.

**Viscosity Measurement**

After aging each plastisol prepared in Examples 1 and 2 and Comparative Example 1 in a constant-temperature oven of 25 °C for 1 hr, viscosity of the same was measured by using Brookfield viscometer (spindle # 6, 5 rpm).

**Foam Surface and Foam Cell Measurement**

The foam sheets were prepared by coating each plastisol prepared in Examples 1 and 2 and Comparative Example 1 on a paper to the thickness of 1.0 mm with an applicator, and foaming the same in an oven of 230 °C.

The foamability of the prepared foam sheets was observed with naked eye, and the photos were taken by using an optical microscope. For evaluating the uniformity of foam cells, the maximum size and the minimum size of the cells were measured and the uniformity of cells was represented by the ratio of the maximum size/the minimum size.

The results of viscosity and foamability measured to Examples 1 and 2 and Comparative Example 1 are listed in the following Table 2.

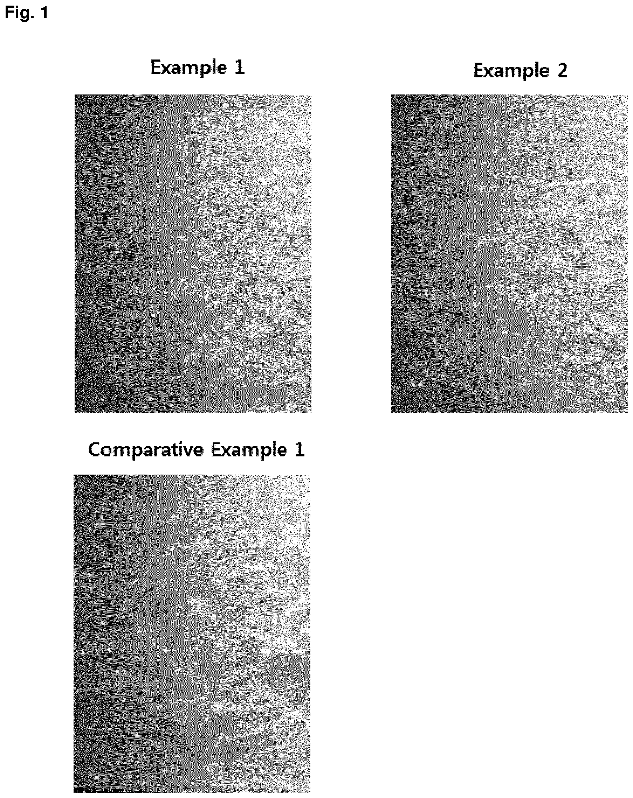

Furthermore, the photos of the foam cells of Examples 1 and 2 and Comparative Example 1 magnified 20 times by using an optical microscope are illustrated in Fig. 1.

[Table 2]

|  | Example 1 | Example 2 | Comparative Example 1 |
|---|---|---|---|
| Viscosity | 10,000 cps | 9,280 cps | 6,240 cps |
| Foam Surface | Very Good | Very Good | Good |
| Maximum Cell Size | 0.41 mm | 0.47 mm | 0.82 mm |
| Minimum Cell Size | 0.37 mm | 0.32 mm | 0.30 mm |
| Uniformity of Cells (Maximum Cell Size/ Minimum Cell Size) | 1.11 | 1.47 | 2.73 |

Referring to Table 2 and Fig. 1, Examples 1 and 2 showed improved foamability such as good foam surface and uniform cell distribution in comparison to Comparative Example 1.

## Moisture Resistance Measurement

Each plastisol prepared in Example 3 and Comparative Example 1 was moisturized by storing the same in a constant temperature and humidity oven of the temperature of 40 °C and the humidity of 80 % for 4 hrs.

Subsequently, the foam sheet was prepared by coating the plastisol on a paper to the thickness of 1.0 mm with an applicator, and foaming the same in an oven of 230 °C.

The foamability of the prepared foam sheets was observed with naked eye, and the photos were taken by using an optical microscope. For evaluating the uniformity of foam cells, the maximum size and the minimum size of the cells were measured and the uniformity of cells was represented by the ratio of the maximum size/the minimum size.

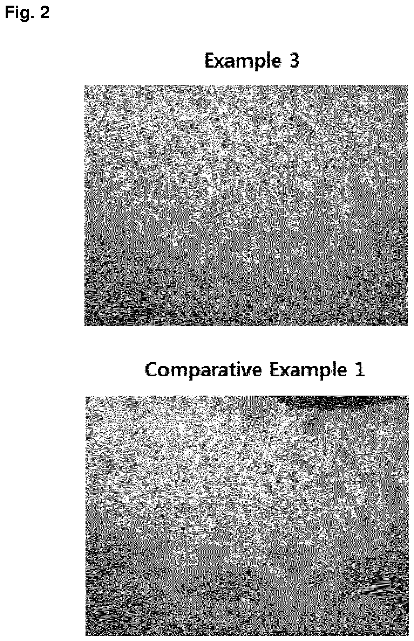

The results of viscosity and foamability measured to Example 3 and Comparative Example 1 are listed in the following Table 3. And, the photos of the foam cells of Example 3 and Comparative Example 1 magnified 20 times by using an optical microscope are illustrated in Fig. 2.

[Table 3]

|  | Example 3 | Comparative Example 1 |
|---|---|---|
| Viscosity | 5,680 cps | 7,360 cps |
| Foam Surface | Good | Bad |
| Maximum Cell Size | 0.51 mm | Bad cell occurred |
| Minimum Cell Size | 0.37 mm | - |
| Uniformity of Cells (Maximum Cell Size/ Minimum Cell Size) | 1.38 | Very bad |

Referring to Table 3 and Fig. 2, Example 3 showed excellent foamability even after it was exposed to a high humidity circumstance and moisturized. Therefore, it is recognizable that the PVC paste resin of the present invention shows improved moisture resistance and can maintain excellent properties even in a high temperature high humidity circumstance.

## Claims

1. A polyvinyl chloride paste resin, including:

a polyvinyl chloride resin; and
a styrene/acrylic resin,
wherein the styrene/acrylic resin is a copolymer in which styrene monomer and acrylic monomer are copolymerized with the weight ratio of 60:40 to 80:20,
wherein the styrene monomer is a mixture of styrene and alpha-methyl styrene, and
wherein the acrylic monomer is acrylic acid or a mixture of acrylic acid and alkyl acrylate.

2. The polyvinyl chloride paste resin according to Claim 1, wherein the weight ratio of the polyvinyl chloride resin and the styrene/acrylic resin is 1:0.0005 to 1:0.2.

3. The polyvinyl chloride paste resin according to Claim 1, wherein the weight average molecular weight (Mw) of the styrene/acrylic resin is 1,000 to 20,000 g/mol.

4. A preparation method of polyvinyl chloride paste resin, including the steps of:

preparing a polyvinyl chloride resin latex including a polyvinyl chloride resin;
adding a styrene/acrylic resin solution to the polyvinyl chloride resin latex; and
drying the polyvinyl chloride resin latex to which the styrene/acrylic resin solution is added,
wherein the styrene/acrylic resin is a copolymer in which styrene monomer and acrylic monomer are copolymerized with the weight ratio of 60:40 to 80:20,
wherein the styrene monomer is a mixture of styrene and alpha-methyl styrene, and
wherein the acrylic monomer is acrylic acid or a mixture of acrylic acid and alkyl acrylate.

5. The preparation method according to Claim 4, wherein the amount of the styrene/acrylic resin solution added is 0.01 to 10 parts by weight per 100 parts by weight of the polyvinyl chloride resin latex.

6. The preparation method according to Claim 4, wherein the styrene/acrylic resin solution is an aqueous solution prepared by dissolving the styrene/acrylic resin in deionized water with the concentration of 0.1 to 50%.

7. The preparation method according to Claim 4, wherein the weight average molecular weight (Mw) of the styrene/acrylic resin is 1,000 to 20,000 g/mol.

**Patentansprüche**

1. Pastöses Polyvinylchloridharz, welches aufweist:

ein Polyvinylchloridharz und
ein Styrol/Acrylharz,
wobei das Styrol/Acrylharz ein Copolymer ist, in dem Styrolmonomer und Acrylmonomer mit dem Gewichtsverhältnis von 60:40 bis 80:20 copolymerisiert sind,
wobei das Styrolmonomer eine Mischung aus Styrol und alpha-Methylstyrol ist, und
wobei das Acrylmonomer Acrylsäure oder eine Mischung aus Acrylsäure und Alkylacrylat ist.

2. Pastöses Polyvinylchloridharz nach Anspruch 1, wobei das Gewichtsverhältnis des Polyvinylchloridharzes und des Styrol/Acrylharzes 1:0,0005 bis 1:0,2 beträgt.

3. Pastöses Polyvinylchloridharz nach Anspruch 1, wobei das durchschnittliche Molekulargewicht (Mw) des Styrol/Acrylharzes 1000 bis 20.000 g/mol beträgt.

4. Herstellungsverfahren für pastöses Polyvinylchloridharz, welches die Schritte aufweist:

Herstellen eines Polyvinylchloridharzlatex, der ein Polyvinylchloridharz aufweist;
Zufügen einer Styrol/Acrylharzlösung zu dem Polyvinylchloridharzlatex; und
Trocknen des Polyvinylchloridharzlatex, dem die Styrol/Acrylharzlösung zugefügt wurde,
wobei das Styrol/Acrylharz ein Copolymer ist, in dem Styrolmonomer und Acrylmonomer mit dem Gewichtsverhältnis von 60:40 bis 80:20 copolymerisiert sind,
wobei das Styrolmonomer eine Mischung aus Styrol und alpha-Methylstyrol ist, und

wobei das Acrylmonomer Acrylsäure oder eine Mischung aus Acrylsäure und Alkylacrylat ist.

5. Herstellungsverfahren nach Anspruch 4, wobei die Menge der zugefügten Styrol/Acrylharzlösung 0,01 bis 10 Gewichtsteile auf 100 Gewichtsteile des Polyvinylchloridharzlatex beträgt.

6. Herstellungsverfahren nach Anspruch 4, wobei die Styrol/Acrylharzlösung eine wässrige Lösung ist, die durch Lösen des Styrol/Acrylharzes in entionisiertem Wasser mit der Konzentration von 0,1 bis 50 % hergestellt wird.

7. Herstellungsverfahren nach Anspruch 4, wobei das durchschnittliche Molekulargewicht (Mw) des Styrol/Acrylharzes 1000 bis 20.000 g/mol beträgt.

**Revendications**

1. Résine de pâte de poly(chlorure de vinyle), comprenant :

une résine de poly(chlorure de vinyle) ; et
une résine styrène/acrylique,
dans laquelle la résine styrène/acrylique est un copolymère dans lequel le monomère de styrène et le monomère acrylique sont copolymérisés avec un rapport en poids de 60:40 à 80:20,
dans lequel le monomère de styrène est un mélange de styrène et d'alpha-méthylstyrène, et
dans lequel le monomère acrylique est l'acide acrylique ou un mélange d'acide acrylique et d'acrylate d'alkyle.

2. Résine de pâte de poly(chlorure de vinyle) selon la revendication 1, dans laquelle le rapport en poids de la résine de poly(chlorure de vinyle) et de la résine styrène/acrylique est de 1:0,0005 à 1:0,2.

3. Résine de pâte de poly(chlorure de vinyle) selon la revendication 1, dans laquelle la masse moléculaire moyenne en poids (Mw) de la résine styrène/acrylique est de 1 000 à 20 000 g/mol.

4. Procédé de préparation d'une résine de pâte de poly(chlorure de vinyle), comprenant les étapes de :

préparation d'un latex de résine de poly(chlorure de vinyle) comprenant une résine de poly(chlorure de vinyle) ;
ajout d'une solution de résine styrène/acrylique au latex de résine de poly(chlorure de vinyle) ; et séchage du latex de résine de poly(chlorure de vinyle) auquel la solution de résine styrène/acrylique est ajoutée,
dans lequel la résine styrène/acrylique est un copolymère dans lequel le monomère de styrène et le monomère acrylique sont copolymérisés avec un rapport en poids de 60:40 à 80:20,
dans lequel le monomère de styrène est un mélange de styrène et d'alpha-méthylstyrène, et
dans lequel le monomère acrylique est l'acide acrylique ou un mélange d'acide acrylique et d'acrylate d'alkyle.

5. Procédé de préparation selon la revendication 4, dans lequel la quantité de la solution de résine styrène/acrylique ajoutée est de 0,01 à 10 parties en poids pour 100 parties en poids du latex de résine de poly(chlorure de vinyle).

6. Procédé de préparation selon la revendication 4, dans lequel la solution de résine styrène/acrylique est une solution aqueuse préparée par dissolution de la résine styrène/acrylique dans de l'eau déminéralisée à une concentration de 0,1 à 50 %.

7. Procédé de préparation selon la revendication 4, dans lequel le poids moléculaire moyen en poids (Mw) de la résine styrène/acrylique est de 1 000 à 20 000 g/mol.

Fig. 1

Example 1

Example 2

Comparative Example 1

**Fig. 2**

Example 3

Comparative Example 1

**EP 2 913 359 B1**

**Patent documents cited in the description**

- US 2988530 A
- US 5391585 A
- KR 830002456 B1
- KR 100301128 B1